# EUROPEAN PATENT APPLICATION

(11) **EP 3 648 411 A1**
(43) Date of publication of application: **06.05.2020**
(21) Application number: 18212440.4
(22) Date of filing: 13.12.2018
(51) Int. Cl.: H04L 12/28, H04L 12/24

(54) **REMOTE-CONFIGURABLE CUSTOMER PREMISES EQUIPMENT**

(30) Priority: 29.10.2018 EP 18203191
(71) Applicant: INTEL Corporation, Santa Clara, CA 95054 (US)
(72) Inventor: GOICHBERG, Nathan, 7749619 Ashdod (IL); PRIEV, Avi, M 49527 Petach-Tikva (IL); SHULMAN, Shaul, 525720 Ramat Gan (IL)
(74) Representative: 2SPL Patentanwälte PartG mbB

(57) **Abstract**

A customer premises equipment (CPE) that can be configured remotely. A CPE may include a first modem configured to process a first signal to and from a macro-area cable network, and a second modem configured to process a second signal to and from an in-premises cable network. The CPE also includes a first filter coupled to the first modem and configured to filter the first signal, and a second filter coupled to the second modem and configured to filter the second signal. A processor in the CPE is configured to generate a control signal for the first filter and/or the second filter to adjust a passband of the first filter and/or the second filter. The processor is configured to receive a configuration message from the macro-area cable network via the first modem and generate the control signal based on the configuration message.

## Description

### Field

Examples relate to a customer premises equipment, more particularly a customer premises equipment with an analog front end (AFE) circuitry that can be configured remotely.

### Background

Data Over Cable Service Interface Specification (DOCSIS) and Multimedia over Coax (MoCA) are communication standards that use coaxial cables as the infrastructure. DOCSIS takes care of communications between a cable modem (CM) that is a customer premises equipment (CPE) and the operator's network head-end (i.e. a cable modem termination system (CMTS)) over a hybrid fiber coax (HFC) plant. MoCA supports an in-premises cable network (e.g. at home) with MoCA devices communicating between them over the coax cable network inside the premises.

Current commonly used revisions of the standards are DOCSIS 3.1 and MoCA 2.0. Since both standards use coax cables as the medium, they reside mostly in different frequency bands but some overlap may still exist. DOCSIS 3.1 may use the spectrum of up to 1218 MHz, while MoCA 2.0 extended band D (ExD) used with a cable equipment is defined from 1125 MHz to 1675 MHz. The MoCA 2.0 extended band D includes two sub-bands: a sub-band D-low from 1125 to 1225 MHz and a sub-band D-high from 1350 to 1675 MHz, with a 125 MHz guard band between the sub-bands.

### Brief description of the Figures

Some examples of apparatuses and/or methods will be described in the following by way of example only, and with reference to the accompanying figures, in which
Fig. 1 is an example cable network;
Fig. 2A is an example MoCA network deployed in a customer premises;
Fig. 2B shows an example home-run architecture of the in-premises cable network;
Fig. 2C shows an example loop-through architecture of the in-premises cable network;
Fig. 2D shows an example cable architecture with two-port configured cable modem in accordance with one example;
Figs. 3A-3C are block diagrams of a CPE in accordance with some examples;
Fig. 4 is a block diagram of an example processor in accordance with one example;
Fig. 5 is a block diagram of an example CPE in accordance with another example;
Fig. 6 shows an example of allocating different frequency bands for DOCSIS and MoCA networks for both dual port and single port cases;
Fig. 7 is a flow diagram of a process of configuring a CPE remotely in accordance with one example; and
Fig. 8 is a block diagram of a network entity configured to send a configuration message to a CPE in accordance with one example.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Examples are disclosed for a CPE (e.g. a cable modem, a cable gateway, etc.) including front-end circuitry for both DOCSIS and MoCA that can be remotely and securely configured in the field by a network operator. A CPE may be any kind of equipment within or in the vicinity of a customer's house, apartment or the like which enables the customer to use a service of a service provider. For example, a cable modem or a cable gateway may be used as a CPE to use internet access, telephone services, broadband audio/video services, and/or the like of a cable network operator. The CPE may be remotely configured for operating in different frequency bands and/or with different port configurations. The cable network operator may control the CPE by using secure communication with the CPE being configured. The examples disclosed herein may allow a cable network operator to use a single type of CPE across various frequency bands and connector configurations, which may reduce the types of inventory. The examples may also reduce the need to dispatch field technicians thus reducing expenses.

A cable network operator may face several challenges with respect to the frequency bands allocations for cable modems and connection types (i.e. port configurations) of the cable modems.

DOCSIS 3.1 and MoCA standards define frequency ranges for each network. According to the current standards, the MoCA frequency range is from 1125 MHz to 1675 MHz and the DOCSIS frequency range is 5 MHz to 1218 MHz range. Nevertheless, cable network operators may choose different frequency band allocations. In some cases, cable network operators might want to change this frequency band allocation at a later stage. For example, cable network operators may upgrade the services for subscribers by expanding the DOCSIS band, e.g. to 1218 MHz to provide additional downstream channels, or improve the utilization of the higher frequency range of the DOCSIS signal. In such case, MoCA networks that use a sub-band D-low (1125-1225 MHz) may need to use a sub-band D-high (1350-1675 MHz) instead to avoid frequency overlap and performance degradation. The cable network operators may also upgrade the services for subscribers by switching to full duplex (FDX). This may require extending the DOCSIS frequency range up to 1218 MHz. Normally these changes would require replacement of the CPE and re-configuration of the DOCSIS and MoCA networks by a technician.

In addition, a DOCSIS network and a MoCA network may work on different cabling configurations. Two connection configurations are possible for a CPE supporting both DOCSIS and MoCA. The CPE may have a single connector (e.g. an F-connector) for both DOCSIS and MoCA. In this case, the CPE is connected to both the DOCSIS network and the MoCA network via the single connector. In the single-connector case, a guard band may exist between the frequency bands for DOCSIS and MoCA. For example, the DOCSIS band may end at 1002 MHz and the MoCA sub-band D-low may start at 1125 MHz. Alternatively, the CPE may have two connectors, one for DOCSIS and one for MoCA (i.e. a dual port having separate connectors for DOCSIS and in-home MoCA). In the dual-connector case, the DOCSIS and MoCA networks are not connected and filtering requirements are less challenging.

If a CPE (e.g. a cable modem) includes two F-connectors and one connector is connected to the DOCSIS plant tap and another connector is connected inside the home without the two cablings being connected, better isolation can be achieved between the two cable networks. Alternatively, if both DOCSIS and MoCA networks are present on the same coaxial cables, separate frequencies may be used for each cable network. In such case, both MoCA signals and DOCSIS signals can be seen on the coaxial cables inside and outside of the home and it is more difficult to achieve the required isolation ratio between the signals. The cable network operator may improve the services for subscribers by using dual-port configuration of the cable equipment. This would require replacement of the CPE by a technician.

The cable network operator may upgrade the network to DOCSIS FDX. In more challenging applications such as DOCSIS FDX the cable network operators may prefer to use the two-port network configuration in order to achieve the target performance. In such case, in order to use an FDX-compliant CPE, the network equipment (e.g. a CMTS, a remote PHY, a cable plant, etc.) may need to be upgraded first. The single/dual port configuration of the conventional CPE and FDX CPE may be different as the operator may use dual port with DOCSIS FDX to minimize interference and performance impact. The CPE and the home network configuration may need to be changed by a technician at the time of upgrade, as they cannot be changed in advance.

Due to the above issues, a cable network operator might also need to support several types of CPEs, either of different models or with different hardware modifications and/or factory settings.

The examples disclosed herein provide solutions to the above issues. The examples allow the cable network operators to perform a reliable remote control over the frequency band allocation and/or port configuration in the field in a secure manner without the need to send a technician to the subscriber home, and use a single type of CPE. This can save capital and operation expenses for the operators.

In some examples disclosed herein, a CPE includes configurable front-end circuitry (e.g. filters, etc.) that would allow support for various configurations and may be controlled over DOCSIS by the cable network operator using a trusted processor within the CPE.

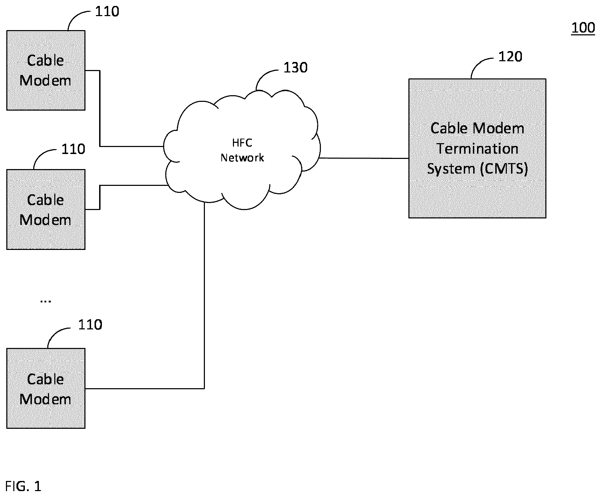

Fig. 1 is an example macro-area cable network 100 (e.g. a DOCSIS network). The multiple systems operators (MSOs) infrastructure includes two primary components: a cable modem 110 and a CMTS 120 that are connected via a hybrid fiber-coax (HFC) network 130. The HFC network 130 is a broadband network comprising an optical fiber network and a coaxial cable network. The cable modem 110 is located at or near the customer premises and the CMTS 120 is located at the cable network headend. The cable network headend is a facility for receiving signals for processing and distribution over the HFC network 130. The cable modem 110 may or may not be a DOCSIS 3.1 FDX-compatible cable modem. The cable modem 110 may be referred to as a cable gateway, a home gateway, a gateway, or the like.

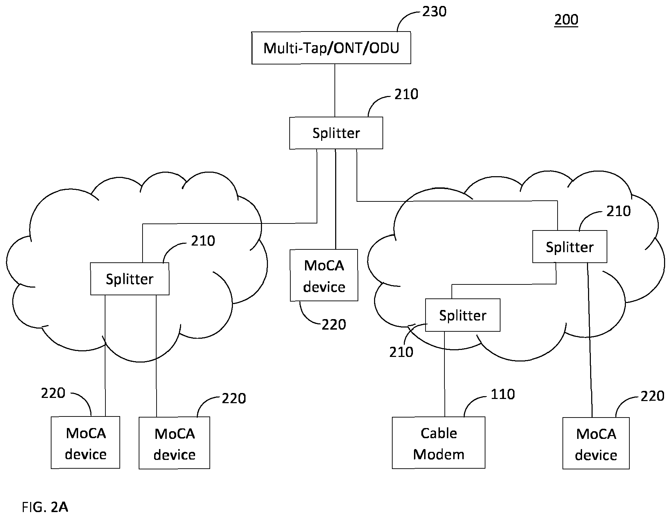

Fig. 2A is an example MoCA network 200 deployed in a customer premises (i.e. an in-premises cable network deployed in a customer's premises, e.g. at home). As an example, the MoCA network 200 (e.g. an in-home coaxial network) may be configured as a branching tree topology of splitters 210 and wiring networks, etc. The point of connection from the multi-tap, optical network terminal (ONT), or optical device unit (ODU) to the first splitter is called a root node. The ONT/ODU converts optical signals transmitted via fiber to electrical signals. The MoCA devices 220 may communicate with each other using a MoCA protocol by having their signals traverse one or more splitters 210. A cable modem 110 may be coupled to one of the splitters 210. Fig. 2A shows a single port configuration of the cable modem 110.

The cable modem 110 may connect to the cable network 100 at one end and to an in-premises network at the other end, bridging packets between the cable network 100 and the in-premises network. Other CPEs may be connected to the cable modem 110 via the in-premises network either wirelessly (e.g. WiFi, Bluetooth®, etc.) or via a wire (e.g. Ethernet, etc.). A cable modem 110 may be integrated with another CPE in a single device or may be a separate standalone device. Examples of CPEs are a cable modem, a home router, a set-top box (STB), a cable gateway, a home gateway, a personal computer, a laptop computer, a tablet, a smartphone, a telephone, an IP TV, an IP phone, or the like.

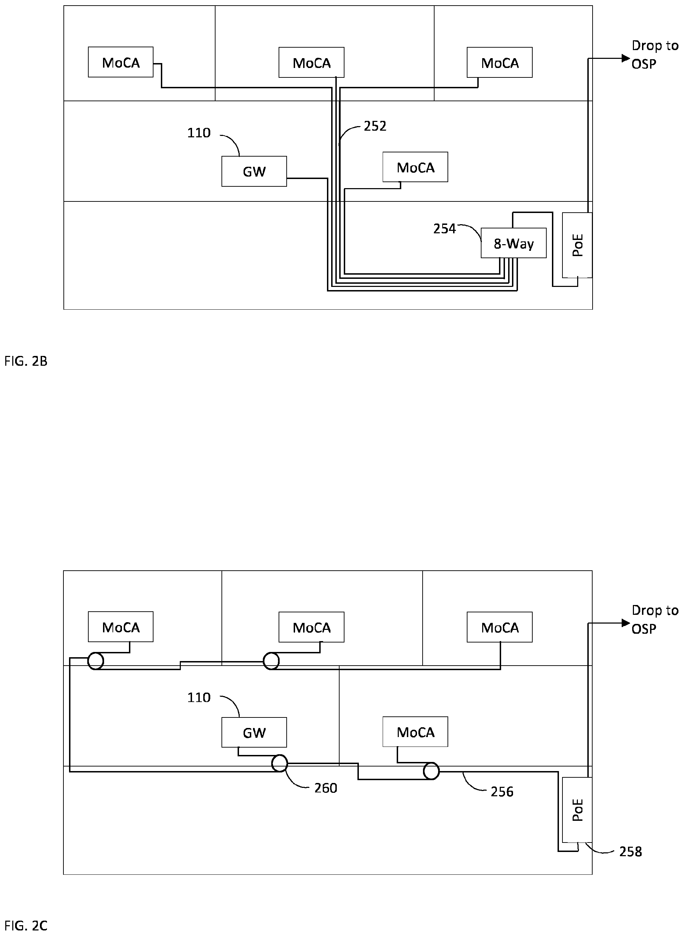

Fig. 2B shows an example home-run architecture of the in-premises cable network. A home-run architecture is similar to a hub-and-spoke architecture, in which each room or unit is fed by a dedicated run of coaxial cable 252 from the splitter 254 . In this example, a single cable is deployed between the splitter 254 and each room.

Fig. 2C shows an example loop-through architecture of the in-premises cable network. A loop-through architecture includes a series-wire 256 from the point of entrance 258 to the rooms or units of the building. One port of a splitter 260 or directional coupler in each room taps off signal for that room.

Figs. 2B and 2C show an example in-premises cable network architecture with a single-port configured cable modem 110 (cable gateway (GW)). The cable modem 110 may be connected to the splitter 254 via a separate cable 252 as shown in Fig. 2B, or to a splitter 260 as shown in Fig. 2C.

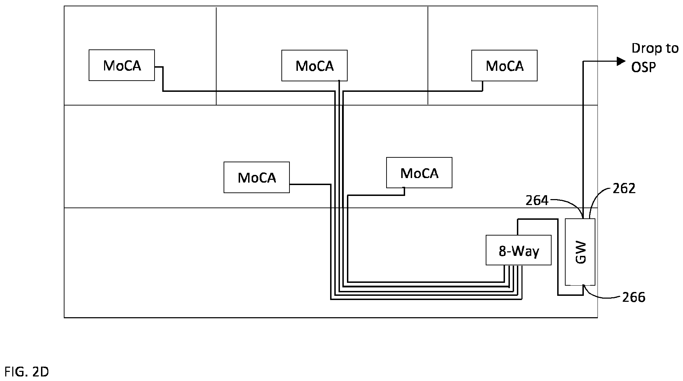

Fig. 2D shows an example cable architecture with two-port configured cable modem 262 in accordance with one example. A two-port cable modem 262 (gateway) may provide isolation between the macro-area cable network and the in-premises cable network. One port 264 of the cable modem 262 is connected to the outside plant (OSP) of the macro-area cable network and the other port 264 of the cable modem is connected to the in-premises cable network.

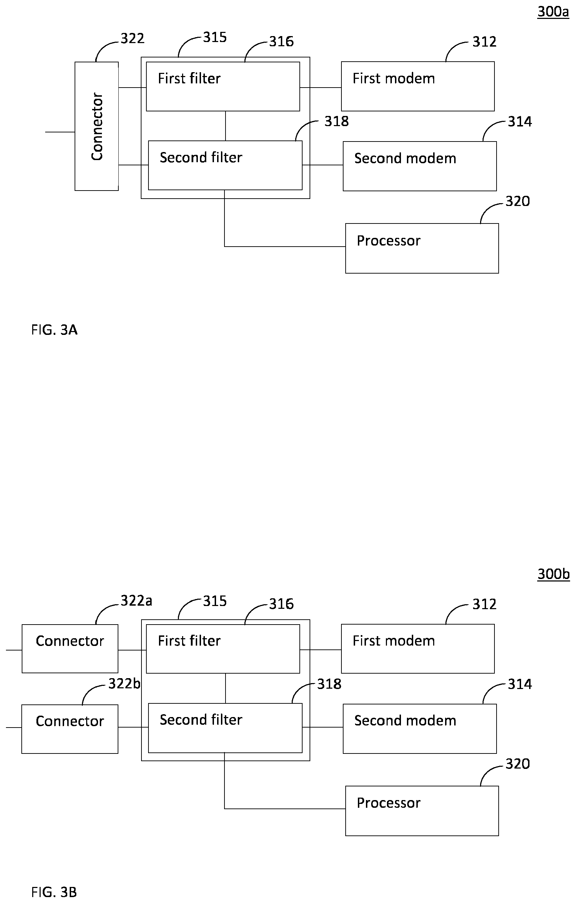

Figs. 3A-3C are block diagrams of a CPE 300a, 300b, 300c (collectively 300) in accordance with some examples.

Fig. 3A shows an example CPE 300a including a single connector. The CPE 300a may be a cable modem or an integrated device including a cable modem, and may be called a cable gateway, a home gateway, or simply a gateway, or the like. The CPE 300a includes a first modem 312, a second modem 314, and a filter 315 (e.g. electronic filtering circuitry). The first modem 312 may be configured to process a first frequency band of a signal and the second modem 314 may be configured to process a second frequency band of signal. The first modem 312 may be a DOCSIS modem and the second modem 314 may be a MoCA modem. The first modem 312 is configured to process signals to and from a macro-area cable network (e.g. a DOCSIS network) in accordance with a first network protocol (e.g. DOCSIS protocol). The second modem 314 is configured to process signals to and from an in-premises cable network (e.g. a MoCA network) in accordance with a second network protocol (e.g. MoCA protocol).

In one example, the filter 315 may be a bank of filters. The filter 315 may include a first filter 316 and a second filter 318. The first filter 316 is coupled to the first modem 312 and the second filter 318 is coupled to the second modem 314. The first filter 316 is configured to filter the signal to and from the macro-area cable network, and the second filter 318 is configured to filter the signal to and from the in-premises cable network. The first filter 316 and the second filter 318 may be analog filters configured to filter signals for a specific frequency band (e.g. a low pass, high pass, or bandpass filter). Any conventional analog filters may be used as the first filter 316 and the second filter 318. The filters may, for example, be analog filters using capacitors, resistors, and/or inductances, or a combination thereof. Depending on the implementation, the filters may also be digital filters, for example, multi-tap filters having a finite or an infinite impulse response.

Both the first filter 316 and the second filter 318 are configurable (tunable) filters such that the passband frequency of the first filter 316 and the second filter 318 may be adjusted. A passband is a range of frequencies that can pass through a filter. For example, the first filter 316 and the second filter 318 may be switched filter banks. Switched filter banks include a combination of switches and a bank of filters. For example, the switched filter banks may include an input switch followed by a bank of filters for multiple frequency bands, followed by an output switch, and one of the filters is switched on in accordance with a control signal from the processor 320. Any type of conventional configurable filters may be used as the first filter 316 and the second filter 318.

The CPE 300a includes a connector 322 to connect to the macro-area cable network and the in-premises cable network. In the example shown in Fig. 3A, the CPE 300a includes a single connector 322 (e.g. a single F-connector). The single connector 322 is shared by the first modem 312 and the second modem 314. The first modem 312 and the second modem 314 may be connected to the macro-area cable network and the in-premises cable network, respectively, via the single connector 322.

The CPE 300a may include a processor 320. The processor 320 may be configured to generate a control signal for the first filter 316 and the second filter 318 to adjust the passband frequency of the first filter 316 and/or the second filter 318. The processor 320 may be configured to receive a configuration message(s) from the macro-area cable network via the first modem 312 and generate the control signal(s) (for filter bandwidth configuration) based on the configuration message(s) received from the macro-area cable network.

Fig. 3B shows an example CPE 300b including multiple separate connectors 322a, 322b (e.g. two separate F-connectors). The CPE 300b may be a cable modem or an integrated device including a cable modem. The CPE 300b includes a first modem 312, a second modem 314, and a filter 315 (i.e. electronic filtering circuitry). The first modem 312 may be configured to process a first frequency band of a signal and the second modem 314 may be configured to process a second frequency band of signal. The first modem 312 may be a DOCSIS modem and the second modem 314 may be a MoCA modem. The first modem 312 is configured to process signals to and from a macro-area cable network (e.g. a DOCSIS network) in accordance with a first network protocol. The second modem 314 is configured to process signals to and from an in-premises cable network (e.g. a MoCA network) in accordance with a second network protocol.

In one example, the filter 315 may be a bank of filters. The filter 315 may include a first filter 316 and a second filter 318. The first filter 316 is coupled to the first modem 312 and the second filter 318 is coupled to the second modem 314. The first filter 316 is configured to filter the signal to and from the macro-area cable network, and the second filter 318 is configured to filter the signal to and from the in-premises cable network. The first filter 316 and the second filter 318 may be analog filters configured to filter signals for a specific passband (e.g. a low pass, high pass, or bandpass filter). Any conventional analog filters may be used as the first filter 316 and the second filter 318. The filters may, for example, be analog filters using capacitors, resistors, and/or inductances, or a combination thereof. Depending on the implementation, the filters may also be digital filters, for example, multi-tap filters having a finite or an infinite impulse response.

Both the first filter 316 and the second filter 318 are configurable (tunable) filters such that the passband frequency of the first filter 316 and the second filter 318 may be adjusted. For example, the first filter 316 and the second filter 318 may be switched filter banks. Any type of conventional configurable filters may be used as the first filter 316 and the second filter 318.

The CPE 300b includes multiple connectors 322a, 322b (e.g. two F-connectors) to connect to the macro-area cable network and the in-premises cable network. The first modem 312 is connected to the first connector 322a, and the second modem 324 is connected to the second connector 322b. The first modem 312 may communicate with the macro-area cable network via the connector 322a, and the second modem 314 may communicate with the in-premises cable network via the connector 322b.

The CPE 300b may include a processor 320. The processor 320 may be configured to generate a control signal for the first filter 316 and the second filter 318 to adjust the passband frequency of the first filter 316 and/or the second filter 318. The processor 320 may be configured to receive a configuration message(s) from the macro-area cable network via the first modem 312 and generate the control signal(s) (for filter bandwidth configuration) based on the configuration message(s) received from the macro-area cable network.

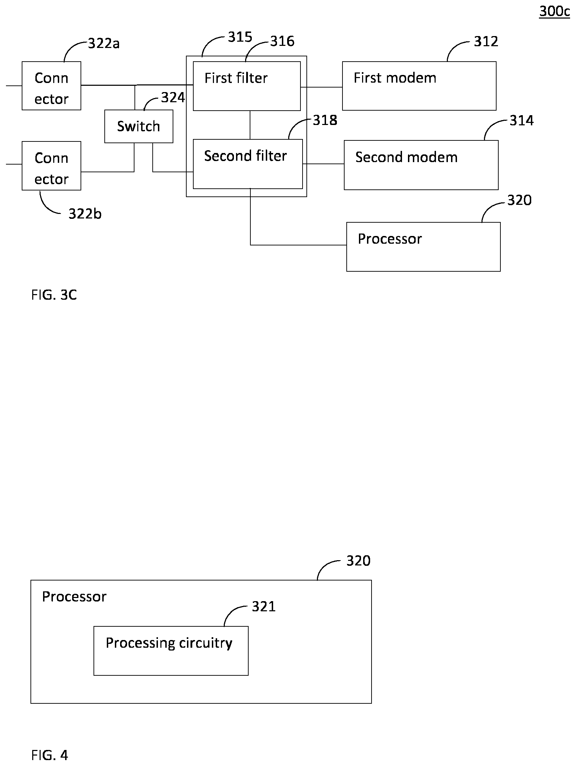

Fig. 3C shows another example CPE 300c including multiple separate connectors 322a, 322b (e.g. two separate F-connectors) and a port configuration switch 324. The CPE 300c may be a cable modem or an integrated device including a cable modem. The CPE 300c includes a first modem 312, a second modem 314, and a filter 315 (i.e. electronic filtering circuitry). The first modem 312 may be configured to process a first frequency band of a signal and the second modem 314 may be configured to process a second frequency band of signal. The first modem 312 may be a DOCSIS modem and the second modem 314 may be a MoCA modem. The first modem 312 is configured to process signals to and from a macro-area cable network (e.g. a DOCSIS network) in accordance with a first network protocol. The second modem 314 is configured to process signals to and from an in-premises cable network (e.g. a MoCA network) in accordance with a second network protocol.

In one example, the filter 315 may be a bank of filters. The filter 315 may include a first filter 316 and a second filter 318. The first filter 316 is coupled to the first modem 312 and the second filter 318 is coupled to the second modem 314. The first filter 316 is configured to filter the signal to and from the macro-area cable network, and the second filter 318 is configured to filter the signal to and from the in-premises cable network. The first filter 316 and the second filter 318 may be analog filters configured to filter signals for a specific passband (e.g. a low pass, high pass, or bandpass filter). Any conventional analog filters may be used as the first filter 316 and the second filter 318. The filters may, for example, be analog filters using capacitors, resistors, and/or inductances, or a combination thereof. Depending on the implementation, the filters may also be digital filters, for example, multi-tap filters having a finite or an infinite impulse response.

Both the first filter 316 and the second filter 318 are configurable (tunable) filters such that the passband frequency of the first filter 316 and the second filter 318 may be adjusted. For example, the first filter 316 and the second filter 318 may be switched filter banks. Any type of conventional configurable filters may be used as the first filter 316 and the second filter 318.

The CPE 300c includes multiple connectors 322a, 322b (e.g. two F-connectors) to connect to the macro-area cable network and the in-premises cable network and a port configuration switch 324. The first connector 322a may be common to the first modem 312 and the second modem 314, and the second connector 322b may be dedicated to the second modem 314. The first modem 312 may be connected to the first connector 322a, and the second modem 314 may be connected either to the first connector 322a or to the second connector 322b. The port configuration switch 324 is coupled between the connectors 322a, 322b and the second filter 318 such that the port configuration switch 324 may switch between the first connector 322a and the second connector 322b for the second modem 314 based on a port configuration control signal from the processor 320.

The processor 320 may be configured to generate a control signal for the first filter 316 and the second filter 318 to adjust the passband frequency of the first filter 316 and/or the second filter 318. The processor 320 may be configured to receive a configuration message(s) from the macro-area cable network via the first modem 312 and generate the control signal(s) (for filter bandwidth configuration and/or port configuration for the second modem 314) based on the configuration message(s).

The processor 320 in the CPEs 300a, 300b, 300c in Figs. 3A-3C may be configured to perform an authentication procedure with a network entity (e.g. a CMTS) of the macro-area cable network to establish a secure connection with the network entity. The processor 320 may implement any conventional authentication procedures for establishment of the secure connection. The processor 320 may receive control signals from the network for the bandwidth configuration of the filters 316, 318 and/or port configuration for the second filter 318 after establishing a secure connection with the network entity.

Fig. 4 is a block diagram of an example processor 320 in accordance with one example. The processor 320 includes a processing circuitry 321 configured to implement the procedures disclosed herein. The processing circuitry 321 may include a specific hardware configured to implement the examples disclosed herein, a general-purpose hardware configured to run software configured to implement the examples disclosed herein, or a combination thereof.

The processing circuitry 321 may be configured to receive a configuration message from a macro-area cable network via the first modem 312, 412 and generate a control signal for the first filter 316, 416 and/or the second filter 318, 418 to adjust a passband of the first filter 316, 416 and/or the second filter 318, 418 based on the configuration message. The filters 316, 318 may be a switched filter bank such that one of the filters in the filter bank may be switched on in accordance with the control signal from the processing circuitry 321.

The processing circuitry 321 may be configured to receive another control signal from the macro-area cable network and generate a port configuration control signal to control a port configuration switch 324 to switch the second modem 314 to either a first connector 322a or a second connector 322b based on the second control signal.

The processing circuitry 321 may be configured to perform an authentication procedure with a network entity (e.g. a CMTS) of the macro-area cable network to establish a secure connection with the network entity. The processing circuitry 321 may implement any conventional authentication procedures for establishment of the secure connection. The processing circuitry 321 may then receive control signals from the network for the bandwidth configuration of the filters 316, 318 and/or port configuration for the second filter 318.

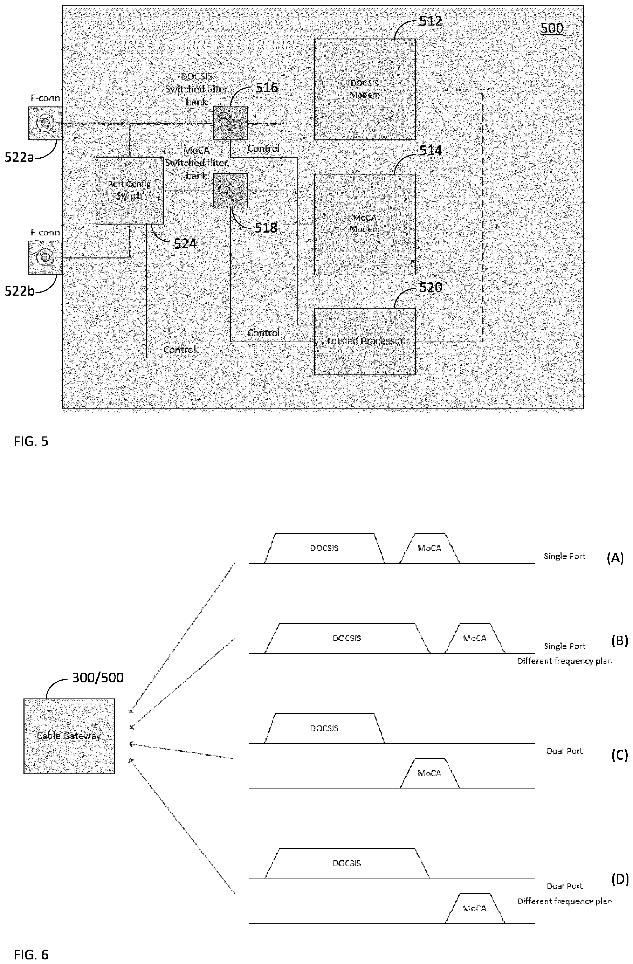

Fig. 5 is a block diagram of an example CPE 500 in accordance with one example. The CPE 500 includes a DOCSIS modem 512, a MoCA modem 514, filters 516, 518, a processor 520, and a connector 522a. The CPE 500 may optionally include an additional connector 522b and a port configuration switch 524. The DOCSIS modem 512 and the MoCA modem 514 modulate and demodulate signals in accordance with DOCSIS and MoCA protocols, respectively. Each of the DOCSIS modem 512 and the MoCA modem 514 is coupled to a connector(s) 522a/522b (e.g. an F-connector(s)) via a corresponding filter 516/518. DOCSIS and MoCA signals pass via the corresponding filters 516, 518, respectively. In a single port case or a dual port case where the MoCA modem 514 is connected to the common connector 522a, both DOCSIS and MoCA signals are seen at inputs of both filters 516, 518 and DOCSIS signals pass via the filter 516 while being blocked by the filter 518, and MoCA signals pass via the filter 518 while being blocked by the filter 516. Each filter 516, 518 filters a signal for a specific frequency band. The filters 516, 518 are configurable by a control signal from the processor 520 so that the passband frequency of the filters 516, 518 may be adjusted. The filters 516, 518 may be switched filter banks including switches and a bank of filters for several passband frequencies such that one of the filter banks may be switched on in accordance with the control signal from the processor 520.

The CPE 500 may include a single connector 522a. In this case, both the DOCSIS modem 512 and the MoCA modem 514 are coupled to the single connector 522a and share the single connector 522a.

Alternatively, the CPE 500 may include multiple (e.g. two) connectors 522a, 522b and the DOCSIS modem 512 and the MoCA modem 514 may be connected to a separate connector. In one example, one connector 522a may be common for the DOCSIS modem 512 and the MoCA modem 514 and the other connector 522b may be dedicated to the MoCA modem 514. In this case, MoCA signals may be taken either from the connector 522a that is common with the DOCSIS modem 512 or from the dedicated connector 522b. This may be accomplished by using the port configuration switch 524 (e.g. a radio frequency (RF) switch). The port configuration switch 524 may switch the connector 522a, 522b (i.e. the port) to the MoCA modem 514 in accordance with a control signal from the processor 520.

The processor 520 may perform an authentication and security procedure among other things. The processor 520 may perform an authentication procedure with a cable network head-end, such as a CMTS to establish a secure connection with the cable network head-end. Any conventional authentication protocol may be implemented between the processor 520 and the cable network head-end for mutual authentication before communicating the control messages between the cable network head-end and the processor 520.

The processor 520 may perform frequency band and/or port configuration from the network. As an example, if the network operator wants to change the frequency plan, the frequency band for the DOCSIS modem 512 and/or the MoCA modem 514 may be changed by the network operator remotely by sending a re-configuration message to the processor 520 via the DOCSIS network. Upon receipt of the frequency band re-configuration message from the network head-end, the processor 520 sends a control signal to the first filter 516 and/or the second filter 518 to change the passband frequency of the first filter 516 and/or the second filter 518. The frequency band re-configuration may be performed without replacing the CPE 500 or sending a technician to the premises. The subscriber may actually be unaware what happened but can get upgraded connection speeds.

Fig. 6 shows an example of allocating different frequency bands for DOCSIS and MoCA networks for both dual port and single port cases. A cable network operator may allocate different frequency bands for the DICSIS and/or MoCA networks remotely. Fig. 6A and 6B show two different frequency band allocations for the DOCSIS modem and the MoCA modem for the single port case. As an example, the cable network operator may send a control signal to the CPE 300, 500 to change the frequency band allocations from Fig. 6A to Fig. 6B remotely. Figs. 6C and 6D show two different frequency band allocations for the DOCSIS modem and the MoCA modem for the dual port case. In Figs. 6C and 6B, the cable modem 300 transmits and receives signal on separate lines since the cable modem 300, 500 includes multiple ports. As an example, the cable network operator may send a control signal to the CPE 300, 500 to change the frequency band allocations from Fig. 6C to Fig. 6D remotely. As shown in Fig. 6, a different frequency band allocation may be implemented dynamically by the cable network operator by sending a configuration message remotely.

Referring to Fig. 5, the network operator may also change the port configuration remotely by sending a re-configuration message to the processor 520 via the DOCSIS network. The processor 520 receives the port configuration message from the cable network head-end and sends a control signal to the port configuration switch 524 to switch the F-connector for the MoCA modem 514.

The port re-configuration may require disconnecting and re-connecting cables, but can still be done without CPE replacement or sending a technician, and may be done by the subscriber (similar to the optional self-install of the network CPE).

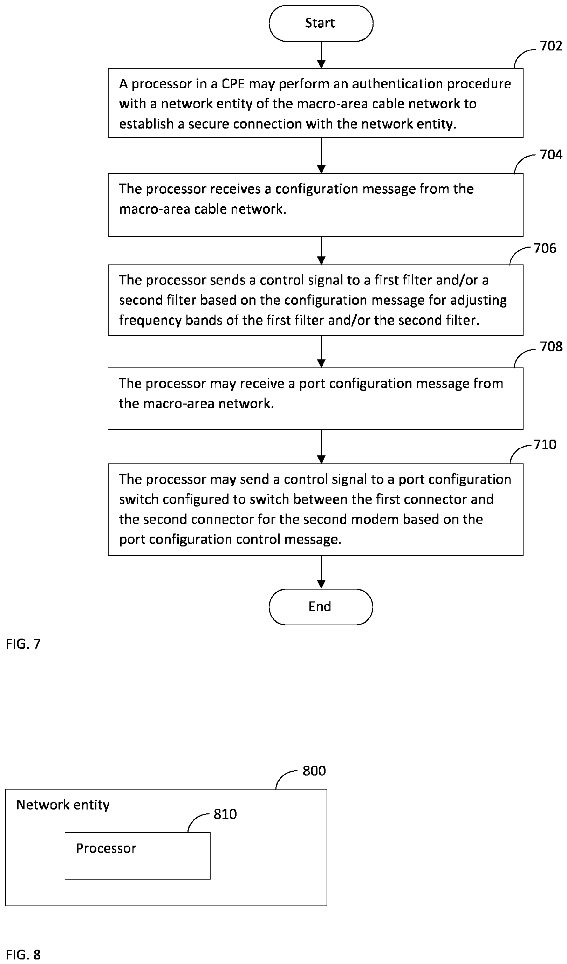

Fig. 7 is a flow diagram of a process 700 of configuring a CPE remotely in accordance with one example. A processor in a CPE may optionally perform an authentication procedure with a network entity of the macro-area cable network to establish a secure connection with the network entity (702). The processor in a CPE receives a configuration message from the macro-area cable network (704). The processor then sends a control signal to a first filter and/or a second filter based on the configuration message for adjusting a passband of the first filter and/or the second filter (706). The first filter is coupled to a first modem configured to process a first signal to and from the macro-area cable network and the second filter is coupled to a second modem configured to process a second signal to and from an in-premises cable network.

The first modem and the second modem may be connected to the macro-area cable network and the in-premises cable network, respectively, via a single connector. Alternatively, the first modem and the second modem may be connected to the macro-area cable network and the in-premises cable network, respectively, via a separate connector. In this case, a first connector may be common to the first modem and the second modem, and a second connector may be specific to the second modem.

The processor may receive a port configuration message from the macro-area network (708). The processor may then send a control signal to a port configuration switch configured to switch between the first connector and the second connector for the second modem based on the port configuration control message (710).

Fig. 8 is a block diagram of a network entity 800 configured to send a configuration message to a CPE in accordance with one example. The network entity 800 may be a CMTS located in a macro-area cable network. The network entity includes a processor 810. The processor 810 is configured to send a control message(s) to a CPE 300, 500 to configure filtering frequency bands of the filter(s) and/or port configuration in the CPE 300, 500. The configuration message(s) may be sent to adjust a passband of the first filter 316, 516 and/or the second filter 318, 518 and/or port configuration of a port configuration switch 324, 524 in the CPE 300, 500. The processor 810 may be configured to implement an authentication procedure with the CPE 300, 500 to establish a secure connection before communicating the configuration messages with the CPE 300, 500.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The examples as described herein may be summarized as follows:
Example 1 is a customer premises equipment. The customer premises equipment includes a first modem configured to process a first signal to and from a macro-area cable network, a second modem configured to process a second signal to and from an in-premises cable network deployed in a customer's premises, a first filter coupled to the first modem and configured to filter the first signal, a second filter coupled to the second modem and configured to filter the second signal, and a processor configured to generate a control signal for the first filter and/or the second filter to adjust a passband of the first filter and/or the second filter.
Example 2 is the customer premises equipment of example 1, wherein the first modem and the second modem are connected to the macro-area cable network and the in-premises cable network, respectively, via a single connector.
Example 3 is the customer premises equipment of example 1, wherein the first modem and the second modem are connected to the macro-area cable network and the in-premises cable network, respectively, via a separate connector.
Example 4 is the customer premises equipment of example 3, wherein a first connector is common to the first modem and the second modem and a second connector is specific to the second modem.
Example 5 is the customer premises equipment of example 4, further including a port configuration switch configured to switch between the first connector and the second connector for the second modem based on a port configuration control signal from the processor.
Example 6 is the customer premises equipment as in any one of examples 1-5, wherein the first modem is a DOCSIS modem and the second modem is a MoCA modem.
Example 7 is the customer premises equipment as in any one of examples 1-6, wherein the processor is configured to receive a configuration message from the macro-area cable network via the first modem and generate the control signal based on the configuration message.
Example 8 is the customer premises equipment as in any one of examples 1-7, wherein the processor is configured to perform an authentication procedure with a network entity of the macro-area cable network to establish a secure connection with the network entity.
Example 9 is a processor comprising a processing circuitry. The processing circuitry may be configured to receive a configuration message from a macro-area cable network via a first modem and generate a control signal for a first filter coupled to the first modem that is configured to process a first signal to and from a macro-area cable network and/or a second filter coupled to a second modem that is configured to process a second signal to and from an in-premises cable network deployed in a customer's premises to adjust a passband of the first filter and/or the second filter based on the configuration message.
Example 10 is the processor of example 9, wherein the processing circuitry may be configured to perform an authentication procedure with a network entity of the macro-area cable network to establish a secure connection with the network entity.
Example 11 is the processor of as in any one of examples 9-10, wherein the processing circuitry is configured to receive a second control signal from the macro-area cable network and generate a port configuration control signal to control a port configuration switch to switch the second modem to either a first connector or a second connector based on the second control signal.
Example 12 is a method for configuring a customer premises equipment. The method includes receiving a configuration message from a macro-area cable network and sending a control signal to a first filter and/or a second filter based on the configuration message for adjusting a passband of the first filter and/or the second filter, wherein the first filter is coupled to a first modem configured to process a first signal to and from the macro-area cable network and the second filter is coupled to a second modem configured to process a second signal to and from an in-premises cable network deployed in a customer's premises.
Example 13 is the method of example 12, wherein the first modem and the second modem are connected to the macro-area cable network and the in-premises cable network, respectively, via a single connector.
Example 14 is the method of example 12, wherein the first modem and the second modem are connected to the macro-area cable network and the in-premises cable network, respectively, via a separate connector.
Example 15 is the method of example 14, wherein a first connector is common to the first modem and the second modem and a second connector is specific to the second modem.
Example 16 is the method of example 15, further including receiving a port configuration message, and sending a control signal to a port configuration switch configured to switch between the first connector and the second connector for the second modem based on the port configuration control message.
Example 17 is the method as in any one of examples 12-16, wherein the first modem is a DOCSIS modem and the second modem is a MoCA modem.
Example 18 is the method as in any one of examples 12-17, further including performing an authentication procedure with a network entity of the macro-area cable network to establish a secure connection with the network entity.
Example 19 is a machine-readable storage including machine readable instructions, when executed, to implement a method or realize an apparatus as in any one of examples above.
Example 20 is a network entity in a macro-area cable network. The network entity includes a processor configured to send a control message to a CPE to configure a passband of a first filter coupled to a first modem in the CPE and/or a second filter coupled to a second modem in the CPE.
Example 21 is a Data Over Cable Service Interface Specification, DOCSIS, modem, configured to receive a control message and to adjust a bandwidth of a signal processed by the modem according to the control message.
Example 22 is a Multimedia over Coax, MoCA, modem configured to receive a control message and to adjust a bandwidth of a signal processed by the modem according to the control message.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A customer premises equipment (300, 500), comprising:
a first modem (312, 512) configured to process a first signal to and from a macro-area cable network;
a second modem (314, 514) configured to process a second signal to and from an in-premises cable network deployed in a customer's premises;
a first filter (316, 516) coupled to the first modem and configured to filter the first signal;
a second filter (318, 518) coupled to the second modem and configured to filter the second signal; and
a processor (320, 520) configured to generate a control signal for the first filter (316, 516) and/or the second filter (318, 518) to adjust a passband of the first filter (316, 516) and/or the second filter (318, 518).

2. The customer premises equipment (300, 500) of claim 1, wherein the first modem (312, 512) and the second modem (314, 514) are connected to the macro-area cable network and the in-premises cable network, respectively, via a single connector.

3. The customer premises equipment (300, 500) of claim 1, wherein the first modem (312, 512) and the second modem (314, 514) are connected to the macro-area cable network and the in-premises cable network, respectively, via a separate connector.

4. The customer premises equipment (300, 500) of claim 3, wherein a first connector (322a, 522a) is common to the first modem (312, 512) and the second modem (314, 514) and a second connector (322b, 522b) is specific to the second modem (314, 514).

5. The customer premises equipment (300, 500) of claim 4, further comprising:
a port configuration switch (324, 424) configured to switch between the first connector (322a, 522a) and the second connector (322b, 522b) for the second modem (314, 514) based on a port configuration control signal from the processor (320, 520).

6. The customer premises equipment (300, 500) as in any one of claims 1-5, wherein the processor (320, 520) is configured to receive a configuration message from the macro-area cable network via the first modem (312, 512) and generate the control signal based on the configuration message.

7. The customer premises equipment (300, 500) as in any one of claims 1-6, wherein the processor (320, 520) is configured to perform an authentication procedure with a network entity of the macro-area cable network to establish a secure connection with the network entity.

8. A network entity (800) in a macro-area cable network comprising:
a processor (810) configured to send a control message to a customer premises equipment (300, 500) to configure a passband of a first filter (316, 516) coupled to a first modem (312, 512) in the customer premises equipment (300, 500) and/or a second filter (318, 518) coupled to a second modem (314, 514) in the customer premises equipment (300, 500).

9. A processor (320, 520) comprising:
a processing circuitry (321) configured to receive a configuration message from a macro-area cable network via a first modem (312, 512) and generate a control signal for a first filter (316, 516) coupled to the first modem that is configured to process a first signal to and from a macro-area cable network and/or a second filter (318, 518) coupled to a second modem that is configured to process a second signal to and from an in-premises cable network deployed in a customer's premises to adjust a passband of the first filter (316, 516) and/or the second filter (318, 518) based on the configuration message.

10. The processor (320, 520) of claim 9, wherein the processing circuitry (321) is configured to perform an authentication procedure with a network entity of the macro-area cable network to establish a secure connection with the network entity.

11. The processor (320, 520) of as in any one of claims 9-10, wherein the processing circuitry (321) is configured to receive a second control signal from the macro-area cable network and generate a port configuration control signal to control a port configuration switch (324, 524) to switch the second modem (314, 514) to either a first connector (322a, 522a) or a second connector (322b. 522b) based on the second control signal.

12. A method for configuring a customer premises equipment (300, 500), comprising:
receiving a configuration message from a macro-area cable network; and
sending a control signal to a first filter (316, 516) and/or a second filter (318, 518) based on the configuration message for adjusting a passband of the first filter (316, 516) and/or the second filter (318, 518), wherein the first filter (316, 516) is coupled to a first modem (312, 512) configured to process a first signal to and from the macro-area cable network and the second filter (318, 518) is coupled to a second modem (314, 514) configured to process a second signal to and from an in-premises cable network deployed in a customer's premises.

13. The method of claim 12, wherein the first modem (312, 512) and the second modem (314, 514) are connected to the macro-area cable network and the in-premises cable network, respectively, via a single connector.

14. The method of claim 12, wherein the first modem (312, 512) and the second modem (314, 514) are connected to the macro-area cable network and the in-premises cable network, respectively, via a separate connector, and a first connector (322a, 522a) is common to the first modem (312, 512) and the second modem (314, 514) and a second connector (322b, 522b) is specific to the second modem (314, 514), and the method further comprising:
receiving a port configuration message; and
sending a control signal to a port configuration switch (324, 524) configured to switch between the first connector (322a, 522a) and the second connector (322b, 522b) for the second modem (314, 514) based on the port configuration control message.

15. The method as in any one of claims 12-14, further comprising:
performing an authentication procedure with a network entity of the macro-area cable network to establish a secure connection with the network entity.
